# EUROPÄISCHE PATENTSCHRIFT

(11) **EP 1 600 666 B1**
(45) Veröffentlichungstag und Bekanntmachung des Hinweises auf die Patenterteilung: **27.09.2006**
(21) Anmeldenummer: 05010696.2
(22) Anmeldetag: 18.05.2005
(51) Int. Cl.: F16H 47/02, F16H 57/04

(54) **Antriebsanordnung für ein Fahrzeug**
Hydromechanical driving device for a vehicle
Dispositif hydromécanique d'entrainement d'un véhicule

(30) Priorität: 26.05.2004 DE 102004025763
(43) Veröffentlichungstag der Anmeldung: 30.11.2005
(73) Patentinhaber: ZF FRIEDRICHSHAFEN AG, 88038 Friedrichshafen (DE)
(72) Erfinder: Legner, Jürgen, 88048 Friedrichshafen (DE); Baumann, Klaus, 88239 Wangen (DE); Heilig, Eduard, 88048 Friedrichshafen (DE)

(56) Entgegenhaltungen:
- EP-A- 0 750 136
- EP-A- 1 148 275
- WO-A1-20/05111466
- DE-A1- 2 101 515
- DE-U1-8202004 009 76
- FR-A- 1 321 351
- FR-A- 1 378 683

## Beschreibung

Die Erfindung betrifft eine Antriebsanordnung für ein Fahrzeug gemäß dem Oberbegriff des Patentanspruchs 1.

Aus der DE 39 07 633 A1 ist ein stufenlos regelbarer Fahrantrieb für selbstfahrende Maschinen mit mehreren hydraulischen Fahrmotoren bekannt. Diese Fahrmotoren werden von einer gemeinsamen verstellbaren Fahrantriebspumpe gespeist, wobei in hydraulischer Parallelschaltung mindestens ein bis in eine Nullstellung rückschwenkbarer Verstellmotor und mindestens ein Konstantmotor vorgesehen sind, die in mindestens einem Fall über ein Vorgelege auf einen gemeinsamen Ausgang arbeiten. Zudem ist der Verstellmotor über eine Schaltkupplung mit dem Antriebsausgang verbindbar.

Ein Vorteil dieses Aufbaus ist die gemeinsame Hydraulikflüssigkeitsversorgung der beiden Hydromotoren durch nur eine einzige Fahrantriebspumpe. Ein anderer Vorteil wird darin gesehen, dass einer der Fahrmotoren über die Schaltkupplung nur bei Bedarf in den Antriebsstrang einkoppelbar ist. Als nachteilig wird jedoch beurteilt, dass der zweite Hydromotor gegenüber Antriebssträngen mit nur einem Hydromotor zusätzlichen Bauraum benötigt, der beispielsweise im beengten Einbaubereich eines Radladers zu einer Reduzierung der Bodenfreiheit des Fahrzeugs sowie zu einer Verminderung des maximal möglichen Lenkeinschlags führt.

Vor diesem Hintergrund soll durch die Erfindung die Aufgabe gelöst werden, eine Antriebsanordnung für ein Nutzfahrzeug zu schaffen, welche mit wenigstens zwei von einer gemeinsamen Hydraulikpumpe versorgbaren Hydromotoren sowie ein Getriebe ausgestattet ist, welche besonders kompakt ausgebildet ist.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass ein besonders kompakter gattungsgemäßer Antriebsstrang für ein Nutzfahrzeug geschaffen werden kann, wenn dessen Bestandteile soweit wie möglich zusammengefasst bzw. ineinander integriert werden. Eine solche Integration umfasst dabei bevorzugt die wenigstens beiden Hydromotoren, das Getriebe sowie die Versorgung derselben mit einer gemeinsamen Arbeits- und Kühl- bzw. Schmiermittelversorgung durch eine Pumpe.

Demnach geht die Erfindung aus von einer Antriebsanordnung für ein Fahrzeug, mit wenigstens zwei Hydromotoren, einem von den Hydromotoren antreibbaren Getriebe und einer die Hydromotoren mit einer Hydraulikflüssigkeit versorgenden Pumpe. Zur Realisierung der gewünschten kompakten Bauweise ist zudem vorgesehen, dass die Hydromotoren und das Getriebe eine Baueinheit bilden.

Dies kann beispielsweise dadurch realisiert sein, dass die Hydromotoren und das Getriebe ein gemeinsames Gehäuse aufweisen. Gemäß einer anderen Ausgestaltungsform der Erfindung ist vorgesehen, dass die Gehäuse der wenigstens zwei Hydromotoren und des Getriebes derart ausgebildet und miteinander verbunden sind, dass wenigstens ein Strömungsweg für die Hydraulikflüssigkeit von wenigstens einem der Hydromotoren zu dem Getriebe geschaffen ist. Dieser Strömungsweg ist vorzugsweise ein offener, also nicht in einer Leitung geführter Strömungsweg.

Durch das Zusammenführen der Gehäuse der Hydromotoren sowie des Getriebes sind daher günstige Voraussetzungen dafür geschaffen, dass Hydraulikflüssigkeitsströme für diese Aggregate gemeinsam und ohne zusätzlichen Leitungsaufwand genutzt werden können. Dadurch wird nicht nur zielgerichtet Bauraum eingespart, sondern zudem auch noch die Herstellkosten reduziert.

Hinsichtlich der Hydromotoren ist zu erwähnen, dass diese als Axial- oder Radialkolbenmotoren ausgebildet sein können. Das Getriebe ist bevorzugt ein Summiergetriebe, welches zur Aufnahme der Antriebsleistung den jeweiligen Hydromotoren je Hydromotor eine Getriebeeingangswelle aufweist. Bevorzugt ist dabei wenigstens eine der Getriebeeingangswellen wahlweise mit einer Übersetzungsstufe des Getriebes verbindbar, wodurch einerseits der Kraftstoffverbrauch des Fahrzeugs durch einen lastlosen Betrieb des betroffenen Hydromotors reduzierbar ist, und andererseits beispielsweise die Reisegeschwindigkeit des Fahrzeugs vergrößerbar ist.

Zum Einkoppeln dieses Hydromotors in den Antriebsstrang bzw. zum Verbinden der Getriebeeingangswelle mit der Übersetzungsstufe des Getriebes ist bevorzugt eine aktuatorbetätigbare Koppelvorrichtung vorhanden, mit deren Hilfe ein Losrad der Übersetzungsstufe mit der zugeordneten Getriebeeingangswelle verbindbar ist. Diese Koppelvorrichtung kann eine Schaltkupplung mit oder ohne gesonderte Synchronisationsmittel aufweisen. Im einfachsten Fall kann auf eine gesonderte Schaltkupplung verzichtet werden, wenn beispielsweise einander zugeordnete Reibflächen an dem Losrad und an einem von dem Aktuator axial auf der Getriebeeingangswelle verschiebbaren Koppelmittel angemessen groß dimensioniert sind.

In einer anderen Ausgestaltung ist vorgesehen, dass die Pumpe die wenigstens zwei Hydromotoren über einen Hochdruckleitungskreis mit einem antriebswirksamen Hydraulikflüssigkeitsstrom versorgt. Der Aktuator für die genannte Koppelvorrichtung ist dagegen bevorzugt über eine Steuerdruckleitung mit einem von der Pumpe erzeugten betätigungswirksamen hydraulischen Schaltdruck beaufschlagbar. Die Höhe und der Betätigungszeitpunkt dieses Schaltdrucks werden durch geeignete Steuerungsmittel, wie Schaltventile und ein Steuerungsgerät eingestellt bzw. vorgegeben.

Zur Erzeugung des Hochdrucks und des Steuerdrucks ist bevorzugt vorgesehen, dass die Pumpe zwei Pumpenstufen aufweist, von denen eine erste Pumpenstufe den Hochdruckleitungskreis für die Versorgung der Hydromotoren mit dem arbeitswirksamen Hydraulikflüssigkeitsstrom beaufschlagt, sowie eine zweite Pumpenstufe die Steuerdruckleitungen mit einem druckreduzierten Hydraulikflüssigkeitsstrom versorgt, wobei zu letzteren die Leitungen für den Steuerdruck des Aktuators sowie die Leitungen für die Kühl- und Schmiermittelversorgung der Antriebsaggregate gehören.

Gemäß einer weiteren vorteilhaften Variante der Erfindung ist vorgesehen, dass die Hydromotoren und das Getriebe eine gemeinsame Kühl- und Schmierflüssigkeitsversorgung aufweisen. Als Kühl- und Schmierflüssigkeit wird die von der Pumpe geförderte Hydraulikflüssigkeit genutzt wird, welche auch den Hydromotoren sowie dem Getriebe über einen Steuerdruckleitungskreis zuführbar ist.

Zudem umfasst die Erfindung, dass in dem Steuerdruckleitungskreis für den kühlwirksamen Hydraulikflüssigkeitsstrom ein Ölkühler und/oder ein Spülventil und/oder ein Filter eingebunden ist, welche die Betriebssicherheit der Antriebsanordnung gewährleisten.

Außerdem wird es als vorteilhaft erachtet, wenn der kühl- und schmierwirksame Hydraulikflüssigkeitsstrom derart in dem gemeinsamen Gehäuse oder in den miteinander verbundenen Gehäusen von Getriebe und Hydromotoren geführt wird, dass dieser Hydraulikflüssigkeitsstrom nach Verrichtung seiner Kühl- und Schmierwirkung in einen gemeinsamen Sumpf gelangt. Darüber hinaus kann die Antriebsanordnung so ausgebildet sein, dass auch die Hydraulikflüssigkeit vom Ausgang des Aktuators für die Koppelvorrichtung bzw. Leckage vom Aktuator und der Pumpe in den gemeinsamen Sumpf leitbar ist.

Um den Pumpenkreislauf für die Hydraulikflüssigkeit in sich zu schließen, ist gemäß einer weiteren Ausgestaltung der Erfindung vorgesehen, dass die Hydraulikflüssigkeit aus dem gemeinsamen Sumpf über den Filter in einer Rücklaufleitung zur Pumpe, insbesondere zur Steuerdruckstufe der Pumpe zurückführbar ist. Sofern die am Ausgang des Aktuators anfallende Hydraulikflüssigkeit bzw. Leckage nicht in den gemeinsamen Sumpf geleitet wird, kann zusätzlich eine weitere Rücklaufleitung für diesen Hydraulikflüssigkeitsanteil zur Pumpe vorgesehen sein.

Schließlich soll erwähnt werden, dass diese erfindungsgemäße Antriebsanordnung zum Einbau in ein Nutzfahrzeug, vorzugsweise zum Einbau in einen Radlader ausgebildet ist.

Die vorgestellte Antriebsanordnung ist mit dem Vorteil verbunden, dass dieselbe eine sehr kompakte Bauform aufweist. Zudem wird für die wenigstens zwei Hydromotoren und das Getriebe nur ein Kühler benötigt, welches sich sowohl hinsichtlich der Herstellkosten als auch in bezug auf eine weiter verbesserte Raumausnutzung bei einem Nutzfahrzeug positiv auswirkt. So kann beim Einbau beispielsweise in einem Radlader dessen Bodenfreiheit verbessert sowie ein höherer Lenkeinschlag realisiert werden. Schließlich bewirkt die bauliche Vereinigung der wenigstens zwei Hydromotoren und des Getriebes in bevorzugt ein gemeinsames Gehäuse bzw. die Nutzung einer gemeinsamen Hydraulikflüssigkeit, insbesondere für Kühl- und Schmierzwecke, dass sich diese mit Vorteil bei niedrigen Umgebungstemperaturen im Betrieb schneller als bisher üblich erwärmt, wodurch der Verschleiß in den betroffenen Aggregaten sowie der Kraftstoffverbrauch reduzierbar ist.

Die Erfindung lässt sich anhand eines Ausführungsbeispiels weiter erläutern. Dazu ist der Beschreibung eine Zeichnung beigefügt.
In dieser zeigt
- Fig. 1: eine stark schematisierte Darstellung einer erfindungsgemäß ausgebildeten Antriebsanordnung mit zwei Hydromotoren, einem Summiergetriebe und einer gemeinsamen Pumpe sowie
- Fig. 2: einen Hydraulikplan für eine Antriebsanordnung gemäß Fig. 1.

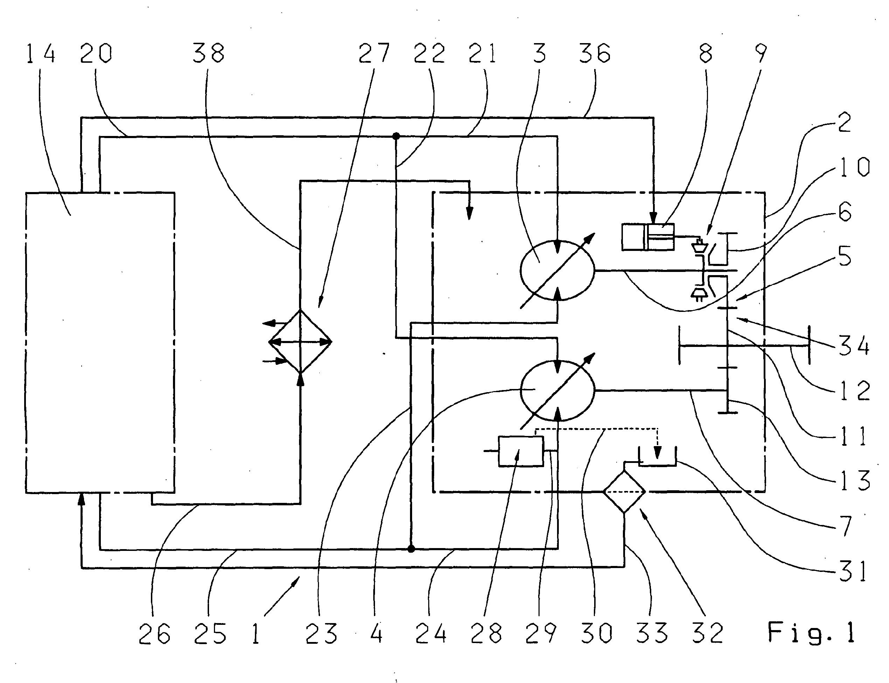

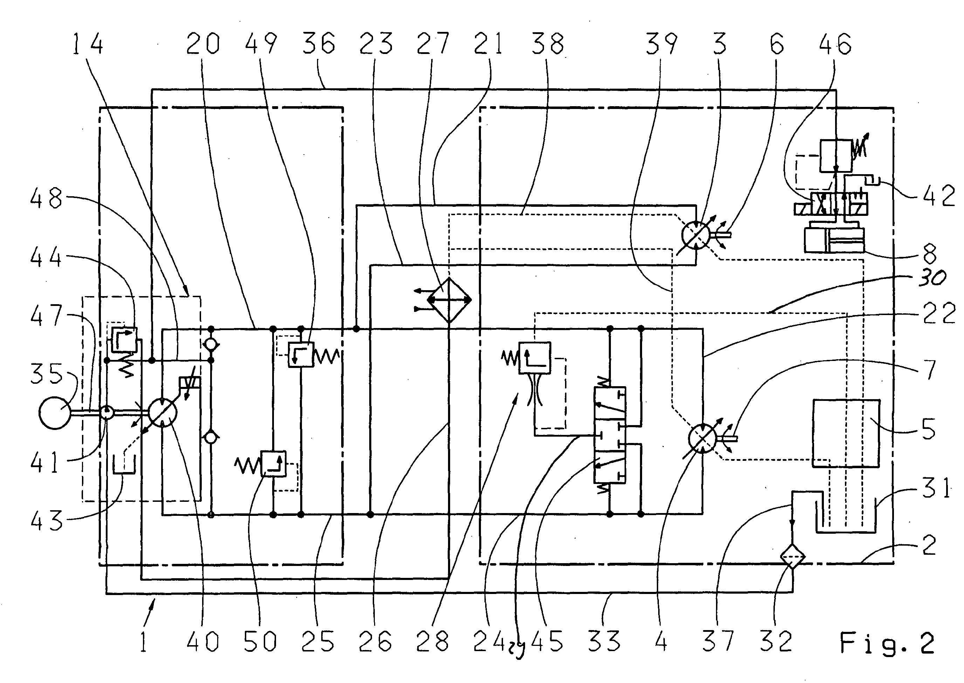

Die in Fig. 1 dargestellte Antriebsanordnung 1 ist in diesem Ausführungsbeispiel in einem nicht dargestellten Radlader verbaut, dessen in Fig. 2 gezeigte Brennkraftmaschine 35 die Pumpe 14 mechanisch antreibt. Bei anderen Fahrzeugtypen kann dieser Antriebsmotor 35 beispielsweise auch als Elektromotor ausgebildet sein.

In der rechten Bildhälfte von Fig. 1 ist ein von einer Strich-Punkt-Linie begrenztes Rechteck eingezeichnet, welches ganz allgemein die Grenzen der Hydromotor-Getriebe-Einheit dieser Antriebsanordnung markiert. Diese Strich-Punkt-Linie kann aber auch als die Außengeometrie eines gemeinsamen Gehäuses 2 für die beiden Hydromotoren 3 und 4 sowie das Summiergetriebe 5 angesehen werden. Durch diesen Aufbau ist eine besonders kompakte Antriebsanordnung geschaffen, durch die insbesondere antriebswirksame, betätigungswirksame und kühlwirksame Hydraulikflüssigkeitsströme gemeinsam genutzt werden können.

Wie Fig. 1 zeigt, ist der erste Hydromotor 3 mit einer ersten Getriebeeingangswelle 6 und der zweite Hydromotor 4 mit einer zweiten Getriebeeingangswelle 7 antriebswirksam verbunden. Die erste Getriebeeingangswelle 6 trägt an ihrem motorfernen Ende ein Losrad 10, welches mittels einer Koppelvorrichtung 9 von einem als Kolben-Zylinder-Anordnung ausgebildeten Aktuator 8 mit eben dieser Getriebeeingangswelle 6 wahlweise verbindbar ist.

Die Koppelvorrichtung 9 umfasst in diesem Ausführungsbeispiel ein axial verschiebbares jedoch drehfest mit der ersten Getriebeeingangswelle 6 verbundenes Koppelmittel, dessen konische Reibfläche mit einer konischen Reibfläche an dem Losrad 10 zur Angleichung der Drehzahl der ersten Getriebeeingangswelle 6 und des Losrades 10 miteinander in Kontakt bringbar ist.

Das Losrad 10 ist Bestandteil einer Übersetzungsstufe 34 dieses Getriebes 5 und kämmt mit einem auf einer Ausgangswelle 12 befestigten Festrad 11. Ebenfalls mit diesem Festrad 11 kämmt ein Festrad 13, welches auf der mit dem zweiten Hydromotor 4 verbundenen zweiten Getriebeeingangswelle 7 befestigt ist.

Den beiden Hydromotoren 3, 4 ist ein weitgehend geschlossener Hochdruckleitungskreis zugeordnet, in den förderwirksam die bereits genannte Hydraulikpumpe 14 eingeschlossen ist. Über diesen Hochdruckleitungskreis werden die beiden Hydromotoren 3, 4 mit einem antriebswirksamen Hydraulikflüssigkeitsstrom versorgt. In diesem Ausführungsbeispiel gehören zu diesem Hochdruckleitungskreis die erste Sammelleitung 20, von der jeweils zwei Leitungen 21 und 22 abzweigen, die direkt zu den Hydromotoren 3, 4 führen. Der andere Zweig dieses Hochdruckleitungskreises führt von den Hydromotoren 3, 4 über die Leitungen 23 und 24 zu der zweiten Sammelleitung 25, welche mit ihrem hydromotorfernen Ende mit der Pumpe 14 strömungstechnisch verbunden ist.

Von dieser Pumpe 14 führt eine weitere Leitung 36 zu dem Aktuator 8 für die Koppelvorrichtung 9, der über ein in Fig. 2 näher dargestelltes Schaltventil 44 mit einem Betätigungsdruck beaufschlagbar ist, welcher bevorzugt unterhalb des Drucks im Hochdruckleitungskreis liegt. Hydraulikmittelverluste können in einem gesonderten Steuerdruckmittelsumpf 42 an dem Aktuator 8 aufgefangen oder an einen gemeinsamen Sumpf 31 weitergeleitet werden.

Diese Antriebsanordnung 1 weist darüber hinaus einen Steuerdruckleitungskreis zur Versorgung der Hydromotoren 3, 4 und des Getriebes 5 mit einem Kühl- und Schmiermittel auf. Dieses Kühl- und Schmiermittel ist hier die ebenfalls die von der Pumpe 14 gefördert Hydraulikflüssigkeit, die über eine Kühlmittelvorlaufleitung 26 und einen Kühler 27 sowie eine Kühlmittelspeiseleitung 38 an die Hydromotoren 3, 4 und an das Getriebe 5 geleitet wird. Nachdem die Hydraulikflüssigkeit die genannten Aggregate 3, 4, 5 gekühlt bzw. geschmiert hat, fließt diese zu dem gemeinsamen Sumpf 31, der bevorzugt an der tiefsten Stelle des gemeinsamen Gehäuses 2 angeordnet ist. Von dort aus gelangt die Hydraulikflüssigkeit über einen Filter 32 und eine Rücklaufleitung 33 zur Pumpe 14 zurück.

Fig. 2 zeigt zudem, dass dieser Antriebsanordnung 1 auch ein Spülventil 28 zugeordnet ist, welches zu Kühlzwecken eine bestimmte Ölmenge aus dem Niederdruckkreis über die Spülleitung 30 zu dem gemeinsamen Sumpf 31 leitet.

Außerdem verdeutlicht Fig. 1 insgesamt, dass durch Nutzung der Lehre der Erfindung eine sehr kompakte Antriebsanordnung 1 geschaffen ist, die wegen der gemeinsamen Nutzung insbesondere des Kühl- und Schmiermittels für die Hydromotoren 3, 4 und das Getriebe 5 gegenüber bekannten Antriebsanordnungen vergleichsweise kostengünstig herstellbar ist.

Fig. 2 zeigt einen Hydraulikplan für die erfindungsgemäß ausgebildete Antriebsanordnung. Die in dieser Darstellung verwendeten Bezugszeichen finden sich teilweise auch in Fig. 1 wieder.

Bei dieser Antriebsanordnung 1 treibt die Brennkraftmaschine 35 mit ihrer Antriebswelle 47 die Pumpe 14 mechanisch an. Diese Pumpe 14 besteht im wesentlichen aus zwei Pumpenstufen, die hier als eine Hochdruckpumpe 40 und eine Niederdruckpumpe 41 ausgebildet sind, die von der gleichen Antriebswelle 47 angetrieben werden.

Die Hochdruckpumpe 40 fördert in einem Hochdruckleitungskreis, umfassend die Leitungen 20, 21, 22, 23, 24 und 25 eine Hydraulikflüssigkeit unter einem den Betrieb der Hydromotoren 3, 4 gewährleistenden Arbeitsdruck. Die Hydromotoren 3, 4 treiben, wie oben im Zusammenhang mit Fig. 1 erläutert, die Getriebeeingangswelle 6 und 7 des Summiergetriebes 5 an, welches in Fig. 2 nur schematisch dargestellt ist.

Dagegen ist die Steuerdruckpumpe 41 zur Erzeugung eines niedrigeren Drucks der Hydraulikflüssigkeit vorgesehen, der beispielsweise ca. 30 bar betragen kann. Diese Steuerdruckpumpe 41 saugt über einen Ansaugleitungsabschnitt 37 und die Rücklaufleitung 33 die Hydraulikflüssigkeit vorzugsweise über den Filter 32 aus dem gemeinsamen Sumpf 31 an, wobei dieser gemeinsame Sumpf 31 beispielsweise am Getriebegehäuse ausgebildet sein kann, an das die Gehäuse der beiden Hydromotoren 3, 4 angeflanscht sind.

Von der Steuerdruckpumpe 41 gelangt die Hydraulikflüssigkeit über das Druckregelventil 44 in der Leitung 26 zu dem Kühler 27, in dem die Hydraulikflüssigkeit abgekühlt wird. Nach dem Passieren dieses Kühlers 27 wird die Hydraulikflüssigkeit über die Steuerdruckleitungen 38 und 39 zu den beiden Hydromotoren 3 und 4 geleitet, an welchen die Hydraulikflüssigkeit eine Kühlung vornimmt.

Anschließend wird die nun erwärmte Hydraulikflüssigkeit entweder direkt oder vorzugsweise über das Getriebe 5 in den gemeinsamen Sumpf 31 geleitet, aus dem auch das Getriebe 5 zu Kühl- und Schmierzwecken mit der Hydraulikflüssigkeit versorgt wird.

Wie Fig. 2 verdeutlicht, zweigt die Steuerdruckleitung 36 für den Aktuator 8 der Koppelvorrichtung 9 von einer Niederdruckleitung 48 ab, die ebenfalls von der Steuerdruckpumpe 41 direkt mit einem Hydraulikdruck versorgt wird. Dieser Druck kann höher als der Druck in der zu dem Kühler 27 führenden Leitung 26 sein.

Zudem ist in dieser Darstellung erkennbar, dass sowohl der Aktuator 8 eine Leckage in einen Sumpf 42 sowie die Hochdruckpumpe 40 eine Leckage in einen Sumpf 43 entlässt. Diese beiden Sümpfe 42, 43 können zwar als jeweils gesonderte Hydraulikflüssigkeitssümpfe ausgebildet sein, vorzugsweise werden die genannten Leckagen jedoch in den gemeinsamen Sumpf 31 abgeleitet oder von den Sümpfen 42, 43 dort hingeführt.

Die Pumpe 14 bzw. deren Hochdruck- und Steuerdruckpumpenstufen 40, 41 werden von der Brennkraftmaschine 35 in nur eine Drehrichtung angetrieben. Um eine Drehrichtungsumkehr der Hydromotoren 3, 4 realisieren zu können, sind diese mit an sich bekannten Vorrichtungsbestandteilen ausgestattet, die eine Umlenkung des Stroms der Hydraulikflüssigkeit in diesen Motoren und damit eine andere Drehrichtung ermöglichen.

Fig. 2 veranschaulicht, dass zwischen den beiden mit dem zweiten Hydromotor 4 verbundenen Hochdruckleitungen 22, 24 ein doppelseitig federbelastetes Schaltventil 45 angeordnet ist, bei dessen Auslenkung aus der dargestellten Neutralstellung über das Spülventil 28 Hydraulikflüssigkeit aus dem Hochdruckleitungssystem direkt oder über das Getriebe 5 in den gemeinsamen Sumpf förderbar ist. Der Aufbau des Schaltventils 45 gewährleistet je nach Schaltstellung die Entnahme der Hydraulikflüssigkeit aus der Leitung 22 oder der Leitung 24.

Das die Betätigung des Aktuators 8 bewirkende elektromagnetische Schaltventil 46 ist in an sich bekannter Weise so ausgebildet, dass der Kolben des als Kolben-Zylinder-Anordnung ausgebildeten Aktuators 8 aus dem Zylinder herausgefahren oder eingeschoben werden kann, wodurch ein mit dem Kolben wirkverbundenes Koppelmittel auf der Getriebeeingangswelle axial verschoben wird.

Schließlich wird darauf hingewiesen, dass die beiden Sammelleitungen 20 und 25 des Hochdruckleitungssystems über zwei in entgegengesetzte Richtungen wirkende Überdruckventile 49 und 50 miteinander verbunden sind.

### Bezugszeichen

- 1: Antriebsanordnung
- 2: Motor-Getriebe-Einheit; Gehäuse der Motor-Getriebe-Einheit
- 3: Erster Hydromotor
- 4: Zweiter Hydromotor
- 5: Getriebe
- 6: Erste Getriebeeingangswelle
- 7: Zweite Getriebeeingangswelle
- 8: Aktuator, Kolben-Zylinder-Anordnung
- 9: Schaltkupplung, Koppelvorrichtung, Synchronisationseinrichtung
- 10: Losrad
- 11: Festrad auf Ausgangswelle
- 12: Ausgangswelle
- 13: Festrad auf zweiter Getriebeeingangswelle
- 14: Pumpe
- 20: Erste Sammelleitung
- 21: Leitung
- 22: Leitung
- 23: Leitung
- 24: Leitung
- 25: Zweite Sammelleitung
- 26: Kühlmittelvorlaufleitung
- 27: Kühler
- 28: Spülventil
- 29: Spülleitung
- 30: Spülleitung
- 31: Sumpf
- 32: Filter
- 33: Rücklaufleitung
- 34: Übersetzungsstufe des Getriebes
- 35: Brennkraftmaschine
- 36: Leitung zum Aktuator
- 37: Ansaugleitungsabschnitt
- 38: Kühlmittelspeiseleitung
- 39: Kühlmittelspeiseleitung
- 40: Hochdruckpumpe
- 41: Niederdruckpumpe
- 42: Sumpf
- 43: Sumpf
- 44: Druckregelventil an Niederdruckpumpe
- 45: Schaltventil für den zweiten Hydromotor
- 46: Schaltventil für den Aktuator
- 47: Antriebswelle an der Brennkraftmaschine
- 48: Niederdruckleitung
- 49: Überdruckventil
- 50: Überdruckventil

## Patentansprüche

1. Antriebsanordnung für ein Fahrzeug, mit wenigstens zwei Hydromotoren (3, 4), einem von den Hydromotoren (3, 4) antreibbaren Getriebe (5), und einer die Hydromotoren (3, 4) mit einer Hydraulikflüssigkeit versorgenden Pumpe (14), wobei ein Hydromotor (3, 4) über eine aktuatorbetätigbare Koppelvorrichtung (8) in den Antriebsstrang einkoppelbar ist und die Hydromotoren (3, 4) über einen Hochdruckleitungskreis mit Hydraulikflüssigkeit versorgt werden, wobei die Hydromotoren (3, 4) und das Getriebe (5) eine Baueinheit bilden **dadurch gekennzeichnet, dass** die Hydromotore (3, 4) und das Getriebe (5) mit der aktuatorbetätigbaren Koppelvorrichtung in einem Gehäuse (2) oder miteinander verbundenen Gehäusen angeordnet sind, die Pumpe (14) zwei Pumpenstufen ((40, 41) aufweist, von denen eine erste Pumpenstufe (40) den Hochdruckleitungskreis und die zweite Pumpenstufe (41) die Leitungen für den Steuerdruck der aktuatorbetätigbaren Koppelvorrichtung (8) sowie Leitungen für die Kühl und Schmiermittelversorgung (26) beaufschlagt , wobei das Getriebe (5) und die Hydromotore (3, 4) eine gemeinsame Kühl- und Schmiermittelversorgung aufweisen und der Hydraulikflüssigkeitsstrom nach Verrichtung seiner Kühl- und Schmierwirkung und die Hydraulikflüssigkeit der aktuatorbetätigbaren Koppelvorrichtung (8) derart in dem gemeinsamen Gehäuse (2) oder in den miteinander verbundenen Gehäusen von Getriebe (5) und Hydromotoren (3, 4) geführt wird, dass dieser nach dem Verlassen dieser Aggregate (3, 4, 5) in einen gemeinsamen Sumpf (31) in der Baueinheit gelangt.

2. Antriebsanordnung nach Anspruch 1, **dadurch gekennzeich- net, dass** die Gehäuse der Hydromotoren (3, 4) und des Getriebes derart ausgebildet und miteinander verbunden sind, dass wenigstens ein Strömungsweg für die Hydraulikflüssigkeit von wenigstens einem der Hydromotoren (3, 4) zu dem Getriebe (5) geschaffen ist.

3. Antriebsanordnung nach wenigstens einem der vorherigen Ansprüche, **dadurch gekennzeichnet, dass** die Hydromotoren (3, 4) als Axial- oder Radialkolbenmotoren ausgebildet sind.

4. Antriebsanordnung nach wenigstens einem der vorherigen Ansprüche, **dadurch gekennzeichnet, dass** das Getriebe (5) als Summiergetriebe ausgebildet ist und je Hydromotor (3, 4) eine Getriebeeingangswelle (6, 7) aufweist, von denen wenigstens eine Getriebeeingangswelle (6) wahlweise mit einer Übersetzungsstufe (34) des Getriebes (5) verbindbar ist.

5. Antriebsanordnung nach Anspruch 4, **dadurch gekennzeichnet, dass** zum Verbinden der Getriebeeingangswelle (3) mit der Übersetzungsstufe (34) des Getriebes (5) eine aktuatorbetätigbare Koppelvorrichtung (9) vorhanden ist, mit deren Hilfe ein Losrad (10) der Übersetzungsstufe (34) mit der zugeordneten Getriebeeingangswelle (6) verbindbar ist.

6. Antriebsanordnung nach Anspruch 1, **dadurch gekennzeichnet, dass** die Koppelvorrichtung (9) eine Schaltkupplung mit oder ohne Synchronisationsmittel aufweist.

7. Antriebsanordnung nach Anspruch 1, **dadurch gekenn- zeichnet, dass** in den Steuerdruckleitungskreis für den kühl- und schmierwirksamen Hydraulikflüssigkeitsstrom ein Kühler (27) und/oder ein Spülventil (28) und/oder ein Filter (32) eingebunden ist.

8. Antriebsanordnung nach wenigstens einem der vorherigen Ansprüche, **dadurch gekennzeichnet, dass** die Hydraulikflüssigkeit der Leckage von der Pumpe (14) in den gemeinsamen Sumpf (31) leitbar ist.

9. Antriebsanordnung nach wenigstens einem der vorherigen Ansprüche, **dadurch gekennzeichnet, dass** die Hydraulikflüssigkeit aus dem gemeinsamen Sumpf (31) über den Filter (32) in einer Rücklaufleitung (33) zur Pumpe (14) leitbar ist.

10. Antriebsanordnung nach wenigstens einem der vorherigen Ansprüche, **dadurch gekennzeichnet, dass** diese Antriebsanordnung (1) zum Einbau in ein Nutzfahrzeug wie einem Radlader ausgebildet ist.

## Claims

1. The invention relates to a drive layout for a vehicle with at least two hydraulic motors (3, 4), a transmission (5) which can be powered by the hydraulic motors (3, 4), and a pump (14) which supplies the hydraulic motors (3, 4) with hydraulic fluid, with one hydraulic motor (3, 4) being coupleable with the drive train via an actuator-controlled coupling device (8) and with the hydraulic motors (3, 4) being supplied with hydraulic fluid via high-pressure lines, and with the hydraulic motors (3,4) and the transmission (5) constitating a single assembly, **characterized in that** the hydraulic motors (3, 4) and the transmission (5) with the actuator-controlled coupling device are arranged in a single housing (2) or in housings linked to each other, that the pump (14) features two pump stages (40, 41), with the first pump stage (40) operating the high-pressure lines and the second pump stage (41) operating the lines for the control pressure of the actuator-controlled coupling device (8) as well as lines for the supply of coolants and lubricants (26), with the transmission (5) and the hydraulic motors (3, 4) featuring a shared coolant and lubricant supply system, and with the hydraulic fluid flow - having performed its cooling and lubricating effect - including the hydraulic fluid of the actuator-controlled coupling device (8) being conducted within the shared housing (2) or the linked housings of transmission (5) and hydraulic motors (3, 4) in such a way that after exiting these units (3, 4, 5) it ends in a shared sump (31) of the assembly.

2. A drive layout according to claim 1, **characterized in that** the housings of the hydraulic motors (3, 4) and the transmission are designed and linked to each other in such a way that at least one flow path is created for the hydraulic fluid of at least one of the hydraulic motors (3, 4) to reach the transmission (5).

3. A drive layout according to at least one of the preceding claims, **characterized in that** the hydraulic motors (3, 4) are designed as axial-piston or radial-piston motors.

4. A drive layout according to at least one of the preceding claims, **characterized in that** the transmission (5) is designed as a summing transmission and features one transmission input shaft (6, 7) for each hydraulic motor (3, 4), with at least one transmission input shaft (6) being optionally linkable with a gear ratio (34) of the transmission (5).

5. A drive layout according to claim 4, **characterized in that** for the connection of the transmission input shaft (3) with the gear ratio (34) of the transmission (5) an actuator-controlled coupling device (9) is provided, by means of which an idler gear (10) of the gear ratio (34) can be linked to the assigned transmission input shaft (6).

6. A drive layout according to claim 1, **characterized in that** the coupling device (9) features a shift clutch with or without synchronizing device.

7. A drive layout according to claim 1, **characterized in that** the control pressure circuit for the cooling and lubricating hydraulic fluid flow features a cooler (27) and/or a flush valve (28) and/or a filter (32).

8. A drive layout according to at least one of the preceding claims, **characterized in that** the hydraulic fluid of the leakage from the pump (14) can be directed to the shared sump (31).

9. A drive layout according to at least one of the preceding claims, **characterized in that** the hydraulic fluid from the shared sump (31) can be conducted via the filter (32) in a return line (33) to the pump (14).

10. A drive layout according to at least one of the preceding claims, **characterized in that** this drive layout (1) is designed for installation in a commercial vehicle such as a wheeled loader.

## Revendications

1. Dispositif d'entraînement pour un véhicule, qui comprend au moins deux moteurs hydrauliques (3, 4), une transmission (5) qui peut être entraînée par les moteurs hydrauliques (3, 4) et une pompe (14) qui alimente les moteurs hydrauliques (3, 4) en un liquide hydraulique, un des moteurs hydrauliques (3 4) pouvant être accouplé au train d'entraînement par l'intermédiaire d'un dispositif d'accouplement (8) qui peut être actionné par un actionneur, les moteurs hydrauliques (3, 4) étant alimentés en liquide hydraulique par un circuit de conduits à haute pression, les moteurs hydrauliques (3, 4) et la transmission (5) formant un module, **caractérisé en ce que** les moteurs hydrauliques (3, 4) et la transmission (5) sont disposés avec le dispositif d'accouplement actionné par actionneur dans un boîtier (2) ou dans des boîtiers reliés les uns aux autres, **en ce que** la pompe (14) présente deux étages de pompe (40, 41) parmi lesquels un premier étage de pompe (40) alimente le circuit de conduits à haute pression et le deuxième étage de pompe (41) les conduits qui assurent la pression de commande du dispositif (8) d'accouplement actionné par actionneur, ainsi que des conduits de refroidissement et d'alimentation en lubrifiant (26), la transmission (5) et les moteurs hydrauliques (3, 4) présentant une alimentation commune en refroidissement et en lubrifiant et **en ce que** l'écoulement de liquide hydraulique, après avoir assuré son action de refroidissement et de lubrification et le liquide hydraulique du dispositif (8) d'accouplement actionné par actionneur sont amenés dans le boîtier commun (2) ou dans les boîtiers reliés les uns aux autres de la transmission (5) des moteurs hydrauliques (3, 4), de telle sorte qu'après avoir quitté ces dispositifs (3, 4, 5), ces liquides aboutissent dans un carter (31) commun du module.

2. Dispositif d'entraînement selon la revendication 1, **caractérisé en ce que** les boîtiers des moteurs hydrauliques (3, 4) et de la transmission sont configurés et reliés les uns aux autres, de telle sorte qu'au moins un parcours d'écoulement de liquide hydraulique soit créé entre au moins l'un des moteurs hydrauliques (3, 4) et la transmission (5).

3. Agencement d'entraînement selon au moins l'une des revendications précédentes, **caractérisé en ce que** les moteurs hydrauliques (3, 4) sont configurés comme moteurs à piston axial ou à piston radial.

4. Agencement d'entraînement selon au moins l'une des revendications précédentes, **caractérisé en ce que** la transmission (5) est configurée comme transmission à addition et **en ce que** chaque moteur hydraulique (3, 4) présente un arbre d'entrée de transmission (6, 7) parmi lesquels au moins un arbre (6) d'entrée de transmission peut être relié sélectivement à un étage de changement de rapport (34) de la transmission (5).

5. Dispositif d'entraînement selon la revendication 4, **caractérisé en ce que** pour relier l'arbre (3) d'entrée de transmission à l'étage (34) de changement de rapport de la transmission (5), il est prévu un dispositif (9) d'accouplement actionné par actionneur à l'aide duquel une roue libre (10) de l'étage de changement de rapport (34) peut être reliée à l'arbre d'entrée de transmission (6) associé.

6. Agencement d'entraînement selon la revendication 1, **caractérisé en ce que** le dispositif d'accouplement (9) présente un accouplement de changement de rapport doté ou non d'un moyen de synchronisation.

7. Dispositif d'entraînement selon la revendication 1, **caractérisé en ce que** dans le circuit de conduits de pression de commande de l'écoulement de liquide hydraulique à action de refroidissement et de lubrification sont insérés un refroidisseur (27) et/ou une soupape de rinçage (28) et/ou un filtre (32).

8. Agencement d'entraînement selon au moins l'une des revendications précédentes, **caractérisé en ce que** le liquide hydraulique des fuites de la pompe (14) peut être conduit dans le carter commun (31).

9. Agencement d'entraînement selon au moins l'une des revendications précédentes, **caractérisé en ce que** le liquide hydraulique qui provient du carter commun (31) peut être conduit par l'intermédiaire du filtre (32) dans un conduit de recirculation (33) qui aboutit dans la pompe (14).

10. Dispositif d'entraînement selon au moins l'une des revendications précédentes, **caractérisé en ce que** ce dispositif d'entraînement (1) est configuré pour être incorporé dans un véhicule utilitaire, par exemple une chargeuse sur roues.
